(19)

Europäisches Patentamt

European Patent Office

Office européen des brevets

(11) **EP 4 718 711 A1**

(12) **EUROPEAN PATENT APPLICATION**
published in accordance with Art. 153(4) EPC

(43) Date of publication:
01.04.2026  Bulletin 2026/14

(21) Application number: 24810296.4

(22) Date of filing: 16.05.2024

(51) International Patent Classification (IPC):
$H02P\ 23/14^{(2006.01)}$     $H02P\ 23/00^{(2016.01)}$
$H02P\ 23/10^{(2006.01)}$     $H02P\ 27/08^{(2006.01)}$
$H02P\ 29/62^{(2016.01)}$     $F25B\ 1/00^{(2006.01)}$
$B60H\ 1/14^{(2006.01)}$      $F25B\ 49/02^{(2006.01)}$
$H02P\ 7/00^{(2016.01)}$

(86) International application number:
PCT/CN2024/093668

(87) International publication number:
WO 2024/240049 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.05.2023  CN 202310580116

(71) Applicants:
• York Guangzhou Air Conditioning and
Refrigeration Co., Ltd.
Qingyuan, Guangdong 511685 (CN)
• Tyco Fire & Security GmbH
8212 Neuhausen am Rheinfall (CH)

(72) Inventors:
• WANG, Lvming
Qingyuan, Guangdong 511685 (CN)
• JIN, Xiaojun
Qingyuan, Guangdong 511685 (CN)
• KONG, Liuwang
Qingyuan, Guangdong 511685 (CN)
• ZHANG, Zhihong
Qingyuan, Guangdong 511685 (CN)
• SHAN, Guocheng
Qingyuan, Guangdong 511685 (CN)

(74) Representative: **Meissner Bolte Nürnberg
Patentanwälte Rechtsanwälte
Partnerschaft mbB
Bankgasse 3
90402 Nürnberg (DE)**

(54) **PREHEATING APPARATUS AND PREHEATING METHOD FOR COMPRESSOR**

(57)    Provided is a preheating apparatus (100) for a compressor, the apparatus comprising an inverter circuit (102) and a control unit (106), wherein the inverter circuit (102) comprises a first switch apparatus (1021), a second switch apparatus (1022), and a third switch apparatus (1023), and a PWM control module (104) of the control unit (106) outputs first, second and third PWM output module control signals, a PWM output module (105) of the control unit (106) comprises a first counter (1051), a second counter (1052) and a third counter (1053), and respectively compares the first, second and third PWM output module control signals with first, second and third count vales, which have triangular waves, of the fist counter (1051), the second counter (1052) and the third counter (1053) to respectively generate first, second and third PWM control signals, which respectively control the connection and disconnection of the first switch apparatus (1021), the second switch apparatus (1022) and the third switch apparatus (1023), so as to respectively control the power of a corresponding three-phase stator winding provided by a power source (101) to an electric motor (103) of a compressor, at least two of the first, second and third PWM output module control signals being of constant numerical values. The preheating apparatus (100) superimposes a three-phase high-frequency alternating current and a two-phase direct current which are generated on the electric motor (103), such that the pre-heating effect can be improved and the noise can be reduced.

100

102

Inverter circuit 1021

| First switch apparatus |

1022

| Second switch apparatus |

1023

| Third switch apparatus |

101

| Power source |

103

Electric motor

| Winding U |

| Winding V |

| Winding W |

106

Control unit

104

| PMW control module |

Cmp_U
Cmp_V
Cmp_W

105

PMW output module 1051

| First counter |

1052

| Second counter |

1053

| Third counter |

111
PWM_U

112
PWM_V

113
PWM_W

FIG. 1A

## Description

## Technical Field

The present application relates to a compressor, in particular, to preheating of the compressor.

## Background Art

Lubricating oil in a compressor of a variable frequency air conditioner may condense in case of a low ambient temperature, resulting in an increase in viscosity of the lubricating oil. This increases a starting torque and a mechanical wear when a compressor starts, which may easily cause a starting failure of the compressor.

## Summary of the Invention

To solve the above problems, viscosity of a lubricating oil is commonly reduced in a way of heating the lubricating oil. The inventor finds that one heating way is to install an electric heating belt on a casing of a compressor, the casing of the compressor is heated by the electric heating belt, and then heat on the casing of the compressor is transferred into the compressor to heat the lubricating oil. This heating way will increase costs of a whole machine, and has a low heating efficiency, poor heating effect, and long heating time.

The inventor further finds that another heating way is to supply power to a stator of a permanent magnet electric motor of the compressor through a variable-frequency drive. One implementation of such heating is to supply a direct current to a stator winding of the electric motor, so that the current flows through a resistor of the stator winding to generate a copper loss to emit heat, and then the heat is transferred to the lubricating oil in the compressor. The copper loss is a power dissipated on the resistor of the stator winding when the current passes through the stator winding of the electric motor. Since only the stator winding generates heat and therefore the heating power is limited, this cannot satisfy a high power unit compressor with a small stator winding resistance. Another implementation of such heating is to supply an alternating current to the stator winding of the electric motor, to generate a core loss and an eddy current loss on the electric motor to realize heating. The core loss is a loss on a stator core caused by an alternating magnetic field generated by the alternating current in the stator winding. The eddy current loss is a loss caused by an eddy current generated by the alternating magnetic field of the stator in a rotor core and a permanent magnet. The alternating current is output in a way of sine wave PWM modulation, so that a frequency of the alternating current cannot be too high, and needs to be several times lower than a frequency of PWM, resulting in an unsatisfactory heating effect and existence of certain electric motor noise problems.

To solve the above problems in the closest prior art, the present application provides a preheating apparatus for a compressor, which controls connection and disconnection of a switch apparatus based on a control signal output by a control unit, so that a power source generates a superimposition of a three-phase high-frequency alternating current and a two-phase direct current for the electric motor of the compressor, so as to improve a preheating effect on the compressor and reduce or suppress noise.

According to a first aspect of the present application, the present application provides a preheating apparatus for a compressor, where the compressor includes an electric motor with three-phase stator windings U, V, and W. The preheating apparatus includes an inverter circuit and a control unit. The inverter circuit is connected to a power source and includes a first switch apparatus, a second switch apparatus, and a third switch apparatus. The first, second, and third switch apparatuses are respectively connected to the three-phase stator windings U, V, and W, and are configured to be connected and disconnected to respectively control electric power provided by the power source to corresponding three-phase stator windings U, V, and W. The control unit is configured to control connection and disconnection of the first, second, and third switch apparatuses of the inverter circuit. The control unit includes a PWM control module and a PWM output module. The PWM control module is configured to output first, second, and third PWM output module control signals Cmp_U, Cmp_V, and Cmp_W. The PWM output module includes first, second, and third counters respectively having first, second, and third count values Cnt_U, Cnt_V, and Cnt_W. The PWM output module is configured to respectively compare the first, second, and third PWM output module control signals Cmp_U, Cmp_V, and Cmp_W received from the PWM control module to corresponding first, second, and third count valuesCnt_U, Cnt_V, and Cnt_W, to respectively generate first, second, and third PWM control signals PWM_U, PWM_V, and PWM_W, so as to respectively control the connection and disconnection of the first, second, and third switch apparatuses. Waveforms of the first, second, and third count values Cnt_U, Cnt_V, and Cnt_W are triangular waves. At least two of the first, second, and third PWM output module control signals Cmp_U, Cmp_V, and Cmp_W are constant numerical values.

According to the first aspect of the present application, when two of the first, second, and third PWM output module control signals Cmp_U, Cmp_V, and Cmp_W are a constant first numerical value and a constant second numerical value, respectively, a remaining one of the first, second, and third PWM output module control signals Cmp_U, Cmp_V, and Cmp_W is one of the first numerical value and the second numerical value in a rising phase of a triangular wave of its corresponding count value, and is the other one of the first numerical value and the second numerical value in a descending phase of the triangular wave of the corresponding count value.

According to the first aspect of the present application, two of the first, second, and third PWM output module control signals Cmp_U, Cmp_V, and Cmp_W are alternately selected to be the constant first numerical value and the constant second numerical value, respectively. This alternate selection allows the three phases U, V, and W to be supplied with a direct current alternately in pairs during heating, thereby achieving uniform heating and extending a life of the switch apparatus.

According to the first aspect of the present application, triangular waves of the first, second, and third count values Cnt_U, Cnt_V, and Cnt_W have same periodicities and amplitudes and have a phase difference of 120°. Therefore, this solution helps to generate symmetrical three-phase alternating currents to the electric motor and generate a rotating magnetic field, thereby improving a heating effect on the compressor.

According to the first aspect of the present application, the preheating apparatus further includes an electric power collection circuit. The electric power collection circuit is connected to the inverter circuit, and configured to collect a voltage $U_{dc}$ and/or a current $I_{dc}$ provided by the power source to the three-phase stator windings U, V, and W. The PWM control module updates, based on the collected voltage $U_{dc}$ and/or current $I_{dc}$, the first, second, and third PWM output module control signals Cmp_U, Cmp_V, and Cmp_W output by the PWM control module, such that the PWM output module updates the first, second, and third PWM control signals PWM_U, PWM_V, and PWM_W output by the PWM output module accordingly. In the present application, the voltage and/or the current provided by the power source to the three-phase stator windings U, V, and W are fed back to the control unit through the electric power collection circuit, so that the control unit can adjust the electric power provided by the power source to the three-phase stator windings U, V, and W, thereby improving a preheating effect.

According to the first aspect of the present application, the PWM control module includes a sampling module, a current reconstruction module, a power calculation module, an adjustment module, and a comparison module. The sampling module is configured to sample the collected voltage $U_{dc}$ and/or current $I_{dc}$ to output the sampled voltage $U_s$ and/or the sampled current $I_s$. The current reconstruction module is configured to reconstruct direct currents $I_u$, $I_v$, and $I_w$ flowing through the three-phase stator windings U, V, and W based on the sampled current $I_s$. The power calculation module is configured to obtain powers $P_u$, $P_v$, and $P_w$ of the three-phase stator windings U, V, and W based on the sampled voltage $U_s$ and the reconstructed direct currents $I_u$, $I_v$, and $I_w$. The adjustment module is configured to obtain first, second, and third adjustment values $\delta U$, $\delta V$, and $\delta W$ respectively based on received electric power of the three-phase stator windings U, V, and W and predetermined electric power. The electric power of the three-phase stator windings U, V, and W includes the sampled voltage $U_s$, the reconstructed direct currents $I_u$, $I_v$, and $I_w$, and the obtained powers $P_u$, $P_v$, and $P_w$. The comparison module is configured to compare the first, second, and third adjustment values $\delta U$, $\delta V$, and $\delta W$ received from the adjustment module with a comparison predetermined value to respectively output the first, second, and third PWM output module control signals Cmp_U, Cmp_V, and Cmp_W. The PWM control module optionally includes the current reconstruction module and the power calculation module.

According to the first aspect of the present application, the current reconstruction module includes a reconstruction counter. The current reconstruction module is configured to obtain the sampled current $I_s$ as a direct current flowing through one of the three-phase stator windings U, V, and W at a predetermined count value of the reconstruction counter. When the direct current obtained by the current reconstruction module is the same as a corresponding direct current obtained by a detection apparatus, a current count value of the reconstruction counter is determined as the predetermined count value. The reconstruction counter starts counting synchronously with one of the first, second, and third counters corresponding to one of the three-phase stator windings U, V, and W. Through this reconstruction scheme, in the present application, the direct current flowing through the three-phase stator windings can be accurately obtained.

According to the first aspect of the present application, the adjustment module uses PID adjustment to obtain the first, second, and third adjustment values $\delta U$, $\delta V$, and $\delta W$.

According to the first aspect of the present application, the comparison predetermined value is a count value of the first, second, and third counters at a moment of 1/3 periodicity $T_{PWM}/3$ of the first, second, and third counters. The first, second, and third PWM control signals PWM_U, PWM_V, and PWM_W obtained based on the comparison predetermined value can control the connection and disconnection of the first, second, and third switch apparatuses to obtain a good preheating effect on the compressor.

According to a second aspect of the present application, the present application provides a preheating method for a compressor, where the compressor includes an electric motor with three-phase stator windings U, V, and W. The preheating method includes controlling electric power provided by a power source to the three-phase stator windings U, V, and W of the electric motor through the preheating apparatus mentioned above.

**Brief Description of the Drawings**

The drawings are not drawn to scale. In the drawings, each identical or nearly identical component shown in different figures is designated by a same reference number. For purposes of clarity, not every component may be labeled in every figure. In the drawings:

FIG. 1A shows a schematic block diagram of a preheating apparatus according to a first embodiment of the present application;

FIG. 1B shows a schematic block diagram of a preheating apparatus according to a second embodiment of the present application;

FIG. 2 shows a detailed structural diagram of the preheating apparatus in FIG. 1A;

FIG. 3A shows a detailed structural diagram of a first part (including an electric power collection circuit) of the preheating apparatus in FIG. 1B;

FIG. 3B shows a detailed structural diagram of a PWM control module of the preheating apparatus in FIG. 1B;

FIG. 4A shows a schematic diagram of a PWM output module outputting a PWM control waveform of the first embodiment;

FIG. 4B shows a schematic diagram of a PWM output module outputting a PWM control waveform of the second embodiment;

FIG. 4C shows a schematic diagram of a current waveform generated on an electric motor;

FIG. 5A shows a preheating method for a compressor according to an embodiment of the present application;

FIG. 5B shows a preheating method for a compressor according to another embodiment of the present application; and

FIG. 6 shows a schematic block diagram of a control unit of a preheating apparatus.

**Detailed Description of Embodiments**

Various specific embodiments of the present application will be described below with reference to the accompanying drawings of the specification. It should be understood that where possible, same or similar reference numbers used in the present application refer to same parts.

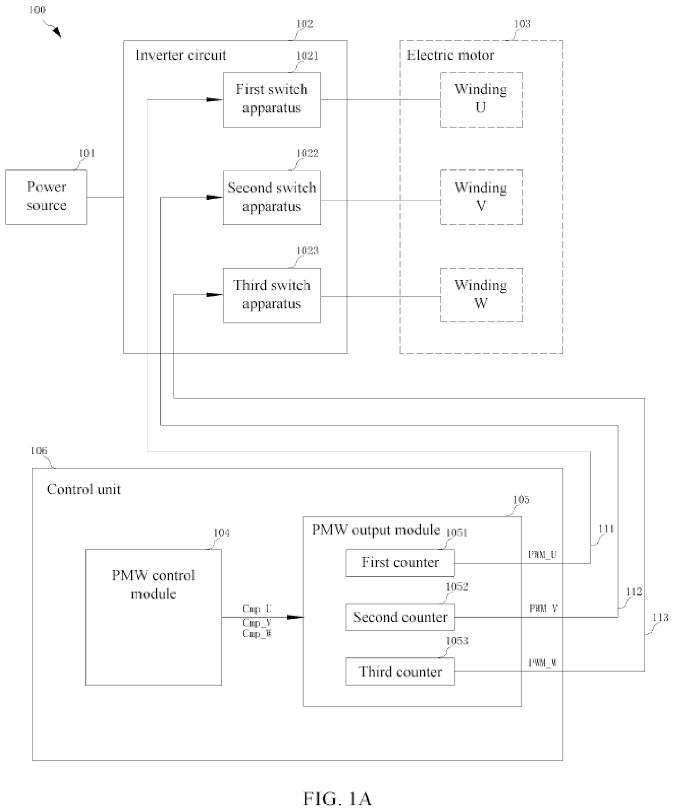

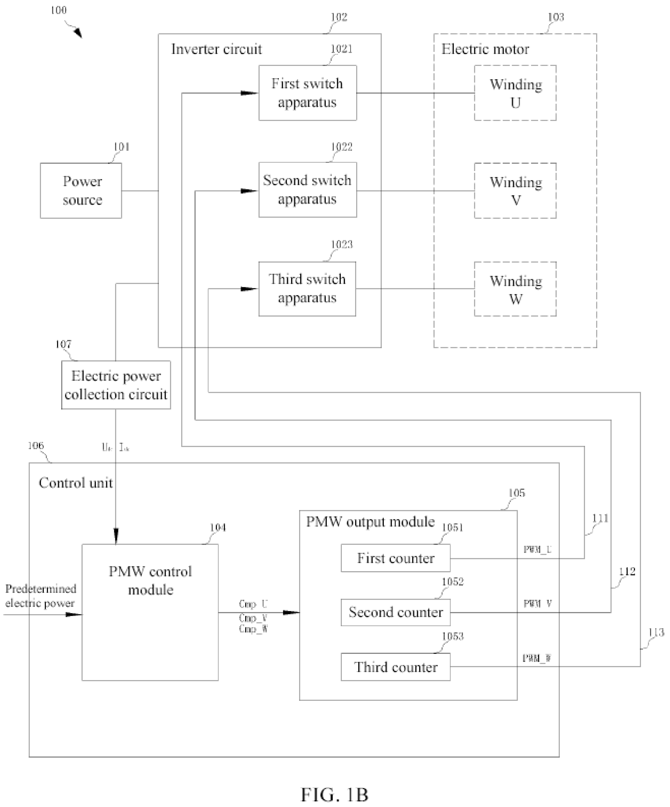

FIG. 1A shows a schematic block diagram of a preheating apparatus 100 according to a first embodiment of the present application, and FIG. 1B shows a schematic block diagram of a preheating apparatus 100 according to a second embodiment of the present application, to illustrate structural composition of the preheating apparatus 100 and a relationship between these structures. As shown in FIGs. 1A and 1B, the preheating apparatus 100 is used to preheat three-phase stator windings U, V, and W of an electric motor 103 of a compressor (not shown) to preheat a lubricating oil in the compressor, thereby preventing the compressor from failing to start.

As shown in FIG. 1A, the preheating apparatus 100 includes an inverter circuit 102 and a control unit 106.

The inverter circuit 102 is connected to a power source 101 and includes a first switch apparatus 1021, a second switch apparatus 1022, and a third switch apparatus 1023. The first, second, and third switch apparatuses 1021, 1022, and 1023 are connected to the three-phase stator windings U, V, and W of the electric motor 103, respectively. The control unit 106 is configured to control connection and disconnection of the first, second, and third switch apparatuses 1021, 1022, and 1023 of the inverter circuit 102, to respectively control electric power provided by the power source 101 to the corresponding three-phase stator windings U, V, and W. In other embodiments, the preheating apparatus 100 includes a power source 101.

The control unit 106 includes a PWM control module 104 and a PWM output module 105. The PWM control module 104 is configured to output first, second, and third PWM output module control signals Cmp_U, Cmp_V, and Cmp_W, to control operation of the PWM output module 105. The PWM output module 105 includes a first counter 1051, a second counter 1052, and a third counter 1053, which respectively have a first count value Cnt_U, a second count value Cnt_V, and a third count value Cnt_W. The PWM output module 105 receives the first, second, and third PWM output module control signals Cmp_U, Cmp_V, and Cmp_W from the PWM control module 104, and respectively compares the first, second, and third PWM output module control signals Cmp_U, Cmp_V, and Cmp_W to corresponding first, second, and third count values Cnt_U, Cnt_V, and Cnt_W, to respectively generate the first, second, and third PWM control signals PWM_U, PWM_V, and PWM_W. The generated first, second, and third PWM control signals PWM_U, PWM_V, and PWM_W are respectively output to first, second, and third switch apparatuses 1021, 1022, and 1023 through connection lines 111, 112, and 113, to respectively control connection and disconnection of the first, second, and third switch apparatuses 1021, 1022, and 1023, thereby respectively controlling electric power provided by the power source 101 to corresponding three-phase stator windings U, V, and W.

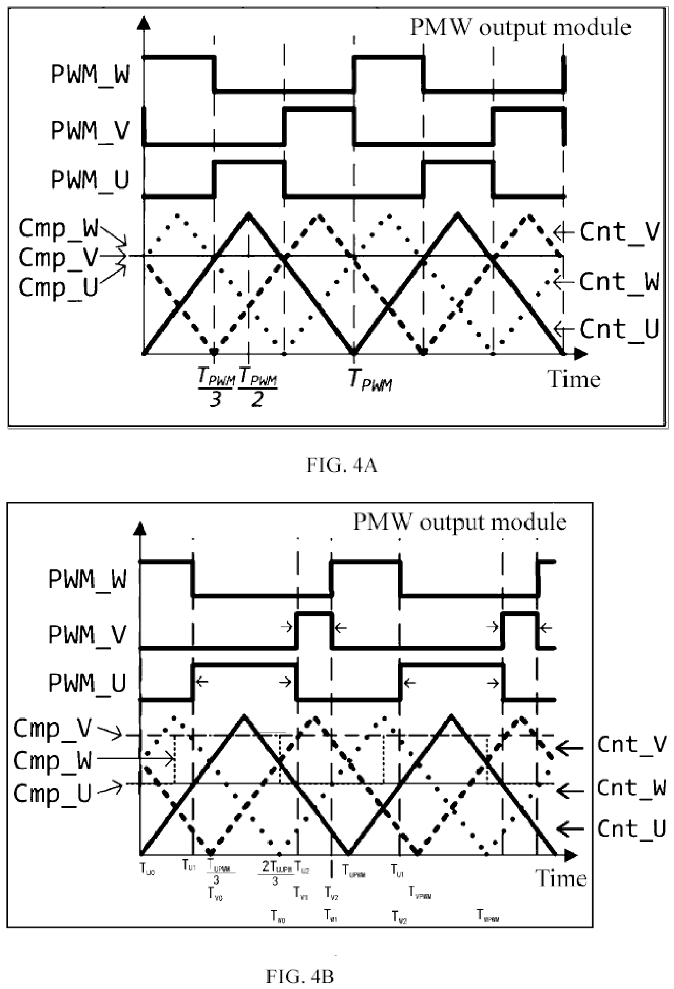

Waveforms of the first, second, and third count values Cnt_U, Cnt_V, and Cnt_W of the first counter 1051, the second counter 1052, and the third counter 1053 are triangular waves. At least two of the first, second, and third PWM output module control signals Cmp_U, Cmp_V, and Cmp_W are constant numerical values. When the constant numerical values of the first, second, and third PWM output module control signals Cmp_U, Cmp_V, and Cmp_W are respectively compared with the triangular waves of the first, second, and third count values Cnt_U, Cnt_V, and Cnt_W, the first, second, and third PWM control signals PWM_U, PWM_V, and PWM_W with the same frequency as corresponding triangular waves are generated, respectively (see FIGs. 4A and 4B). When the generated first, second, and third PWM control signals PWM_U, PWM_V, and PWM_W control the connection and disconnection of the first, second, and third switch apparatuses 1021, 1022, and 1023, the power source 101 can generate a three-phase alternating current with the same frequency as the first, second, and third PWM control signals PWM_U, PWM_V, and PWM_W for the three-phase stator windings U, V, and W, that is, generate a three-phase high-frequency current for the three-phase stator windings U, V, and W.

In the prior art, when sine wave PWM modulation is used to output a PWM control waveform to a switch apparatus to control connection and disconnection of the switch apparatus, a frequency of a three-phase alternating current generated for a three-phase stator winding is several times lower than a frequency of the PWM control waveform. The switch apparatus usually operates at a switch frequency below a switch frequency threshold, that is, the switch frequency of the switch apparatus is limited. Therefore, the frequency of the PWM control waveform used to control the connection and disconnection of the switch apparatus is also limited. That is to say, in the prior art, the frequency of the three-phase alternating current generated for the three-phase stator winding is several times lower than the frequency of the PWM control waveform, which may result in generation of a three-phase alternating current with a lower frequency, for example, the frequency is about 2 to 3 KHZ. As a result, a preheating effect on a compressor is not ideal, and noise may be generated from an electric motor.

Compared with the prior art, in the present application, the power source 101 can generate a three-phase alternating current with the same frequency as the first, second, and third PWM control signals PWM_U, PWM_V, and PWM_W (which are used to control the connection and disconnection of the first, second, and third switch apparatuses 1021, 1022, and 1023, respectively) for the three-phase stator windings U, V, and W. Therefore, in the case that the switch frequencies of the first, second, and third switch apparatus 1021, 1022, and 1023 and the frequencies of the first, second, and third PWM control signals PWM_U, PWM_V, and PWM_W are limited, in the present application, a three-phase alternating current with a higher frequency can be generated for the three-phase stator windings U, V, and W, thereby improving a preheating effect on the compressor and reducing or suppressing noise of the electric motor.

When two of the first, second, and third PWM output module control signals Cmp_U, Cmp_V, and Cmp_W are constant numerical values, the first, second, and third PWM control signals PWM _U, PWM_V, and PWM_W output by the PWM output module 105 can control the connection and disconnection of the first, second, and third switch apparatuses 1021, 1022, and 1023, so that the power source 101 can generate a superimposition of the three-phase alternating current with the same frequency as the first, second, and third PWM control signals PWM_U, PWM_V, and PWM_W and a two-phase direct current for the three-phase stator windings U, V, and W. The superimposition of the three-phase high-frequency alternating current and the two-phase direct current can further improve the preheating effect on the compressor.

The triangular waves of the first, second, and third count values Cnt_U, Cnt_V, and Cnt_W of the present application have same periodicities and amplitudes and have a phase difference of 120° (see FIGs. 4A and 4B). Therefore, this helps to generate a symmetrical three-phase high-frequency alternating current for the three-phase stator windings U, V, and W, and generate a rotating magnetic field, thereby improving a preheating effect on the compressor.

The preheating apparatus 100 in FIG. 1B is similar to the preheating apparatus 100 in FIG. 1A. A difference lies in that, as shown in FIG. 1B, the preheating apparatus 100 further includes an electric power collection circuit 107, and a control unit 106 generates first, second, and third PWM output module control signals Cmp_U, Cmp_V, and Cmp_W based on feedback obtained by the electric power collection circuit 107 and received predetermined electric power. The predetermined electric power is input by a user or preset in the control unit 106.

As shown in FIG. 1B, the electric power collection circuit 107 is connected to an inverter circuit 102. The electric power collection circuit 107 collects electric power provided by a power source 101 to three-phase stator windings U, V, and W to output the collected electric power, for example, the collected voltage $U_{dc}$ and/or current $I_{dc}$. The PWM control module 104 of the control unit 106 receives the collected voltage $U_{dc}$ and/or current $I_{dc}$ from the electric power collection circuit 107 and receives the predetermined electric power (including a voltage, a current, and a power) input by the user, and outputs the first, second, and third PWM output module control signals Cmp_U, Cmp_V, and Cmp_W based on the received collected $U_{dc}$ and/or $I_{dc}$ and the predetermined electric power. When the collected voltage $U_{dc}$ and/or current $I_{dc}$ are/is updated, the PWM control module 104 accordingly updates the first, second, and third PWM output module control signals Cmp_U, Cmp_V, and Cmp_W output by the PWM control module. The PWM output module 105 accordingly updates the output first, second, and third PWM control signals PWM_U, PWM_V, and PWM_W based on the undated first, second, and third PWM output module control signals Cmp_U, Cmp_V, and Cmp_W received from the PWM control module 104, to adjust control of the connection and disconnection of the first, second, and third switch apparatuses 1021, 1022, and 1023, thereby adjusting the electric power provided by the power source 101 to the three-phase stator windings U, V, and W.

In the present application, the first, second, and third PWM control signals PWM_U, PWM_V, and PWM_W are accordingly adjusted based on the actual electric power generated on the three-phase stator windings, to adjust the control of the connection and disconnection of the first, second, and third switch apparatuses 1021, 1022, and 1023, which can improve a preheating operation of the compressor in real time to satisfy required preheating.

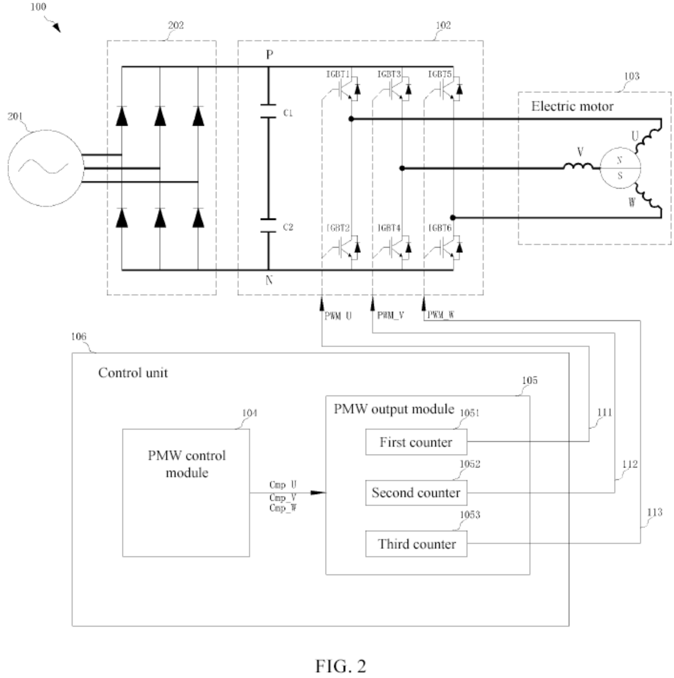

FIG. 2 shows a detailed structural diagram of the preheating apparatus 100 in FIG. 1A to clearly illustrate each constituent structure of the preheating apparatus 100 and a relationship between these constituent structures.

The power source 101 (see FIGs. 1A and 1B) provides electric power to the three-phase stator windings U, V, and W of the electric motor 103 of the compressor (not shown) to achieve preheating of the compressor. In one embodiment, the power source 101 is configured to output direct current power. As shown in FIG. 2, the power source 101 of the preheating apparatus 100 includes an alternating current power supply source 201 and a rectifier circuit 202. The alternating current power supply source 201 outputs an alternating current. The rectifier circuit 202 receives the alternating current from the alternating current power supply source 201 and rectifies the alternating current to output direct current bus electric power to a P terminal and an N terminal of a direct current bus. In other embodiments, the power source 101 includes other suitable apparatuses or circuits.

As shown in FIG. 2, the inverter circuit 102 includes a first capacitor C1 and a second capacitor C2. One end of the first capacitor C1 is connected to the P terminal of the direct current bus, and the other end is connected to one end of the second capacitor C2. The other end of the second capacitor C2 is connected to the N terminal of the direct current bus. The first capacitor C1 and the second capacitor C2 are configured to smooth a voltage fluctuation, and can absorb and release charges to reduce current peaks in a circuit and reduce circuit losses, thereby improving circuit efficiency. In other embodiments, the inverter circuit 102 includes one capacitor.

The inverter circuit 102 further includes a first switch apparatus 1021, a second switch apparatus 1022, and a third switch apparatus 1023 (see FIGs. 1A and 1B), which constitute a three-phase bridge insulated gate bipolar transistor IGBT module. The first switch apparatus 1021 includes an upper bridge IGBT1 and a lower bridge IGBT2, the second switch apparatus 1022 includes an upper bridge IGBT3 and a lower bridge IGBT4, and the third switch apparatus 1023 includes an upper bridge IGBT5 and a lower bridge IGBT6.

Collectors of the upper bridge IGBT1, IGBT3, and IGBT5 are connected to the P terminal of the direct current bus, and emitters of the lower bridge IGBT2, IGBT4, and IGBT6 are connected to the N terminal of the direct current bus. The emitter of the upper bridge IGBT1 is connected to the collector of the lower bridge IGBT2, and their connection point is connected to the stator winding U of the electric motor 103. The emitter of the upper bridge IGBT3 is connected to the collector of the lower bridge IGBT4, and their connection point is connected to the stator winding V of the electric motor 103. The emitter of the upper bridge IGBT5 is connected to the collector of the lower bridge IGBT6, and their connection point is connected to the stator winding W of the electric motor 103.

The first PWM control signal PWM_U generated by the PWM output module 105 is output to gates of the upper bridge IGBT1 and the lower bridge IGBT2 to control connection and disconnection of the upper bridge IGBT1 and the lower bridge IGBT2, so as to control connection and disconnection of the stator winding U of the electric motor 103 to the alternating current power supply source 201, thereby controlling electric power provided by the alternating current power supply source 201 to the stator winding U of the electric motor 103. The second PWM control signal PWM_V generated by the PWM output module 105 is output to gates of the upper bridge IGBT3 and the lower bridge IGBT4 to control connection and disconnection of the upper bridge IGBT3 and the lower bridge IGBT4, so as to control connection and disconnection of the stator winding V of the electric motor 103 to the alternating current power supply source 201, thereby controlling electric power provided by the alternating current power supply source 201 to the stator winding V of the electric motor 103. The third PWM control signal PWM_W generated by the PWM output module 105 is output to gates of the upper bridge IGBT5 and the lower bridge IGBT6 to control connection and disconnection of the upper bridge IGBT5 and the lower bridge IGBT6, so as to control connection and disconnection of the stator winding W of the electric motor 103 to the alternating current power supply source 201, thereby controlling electric power provided by the alternating current power supply source 201 to the stator winding W of the electric motor 103.

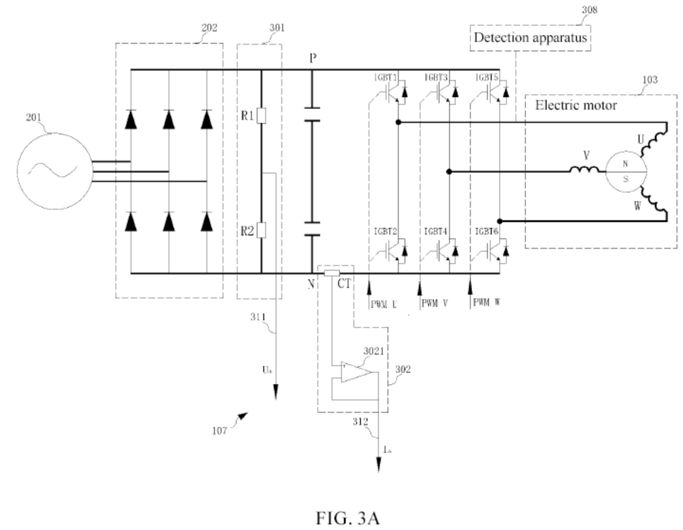

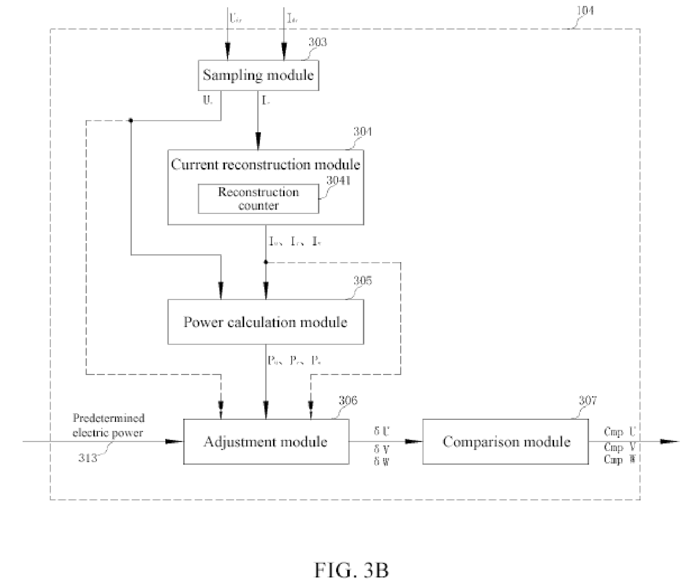

FIG. 3A shows a detailed structural diagram of a first part (including the electric power collection circuit 107) of the preheating apparatus 100 in FIG. 1B, and FIG. 3B shows a detailed structural diagram of the PWM control module 104 of the preheating apparatus 100 in FIG. 1B, to illustrate in detail the specific structures of the preheating apparatus 100 and interrelationships thereof.

FIG. 3A shows the same alternating current power supply source 201, rectifier circuit 202, inverter circuit 102, and electric motor 103 as in FIG. 2. As shown in FIG. 3A, the preheating apparatus 100 further includes the electric power collection circuit 107 (see FIG. 1B), which includes a voltage collection circuit 301 and a current collection circuit 302. The voltage collection circuit 301 is configured to: collect voltages provided by the power source 101 (including the alternating current power supply source 201 and the rectifier circuit 202) to the three-phase stator windings U, V, and W of the electric motor 103, and output the collected voltage $U_{dc}$ to the PWM control module 104. The current collection circuit 302 is configured to: collect currents provided by the power source 101 (including the alternating current power supply source 201 and the rectifier circuit 202) to the three-phase stator windings U, V, and W of the electric motor 103, and output the collected current $I_{dc}$ to the PWM control module 104.

As shown in FIG. 3A, the voltage collection circuit 301 includes a first resistor R1 and a second resistor R2. One end of the first resistor R1 is connected to the P terminal of the direct current bus, and the other end of the first resistor R1 is connected to one end of the second resistor R2. The other end of the second resistor R2 is connected to the N terminal of the direct current bus. The first resistor R1 and the second resistor R2 are connected at their connection point to the PWM control module 104 of the control unit 106 (see FIG. 1B) through a connection line 311, and the collected voltage $U_{dc}$ is output to the PWM control module 104 through the connection line 311. The voltage collection circuit 301 is a voltage dividing circuit, which divides the voltage provided by the power source 101 to the three-phase stator windings U, V, and W of the electric motor 103 into a voltage suitable for input to the PWM control module 104, that is, the collected voltage $U_{dc}$.

The current collection circuit 302 includes a current sensor CT and an operational amplifier 3021. One end of the current sensor CT is connected to the N terminal of the direct current bus, and the other end of the current sensor CT is connected to the emitters of the lower bridge IGBT2, IGBT4, and IGBT6. The current sensor CT detects a current flowing through the three-phase stator windings U, V, and W, and outputs the detected current to the operational amplifier 3021. The operational amplifier 3021 amplifies the received current to obtain the collected current $I_{dc}$, and outputs the collected current $I_{dc}$ to the PWM control module 104 through a connection line 312.

As shown in FIG. 3A, a detection apparatus 308 is connected to the stator winding U to detect a direct current flowing through the stator winding U, for obtaining a predetermined count value of a reconstruction counter 3041 of a current reconstruction module 304 (see FIG. 3B).

As shown in FIG. 3B, the PWM control module 104 includes a sampling module 303, the current reconstruction module 304, a power calculation module 305, an adjustment module 306, and a comparison module 307. The PWM control module 104 is configured to output the first, second, and third PWM output module control signals Cmp_U, Cmp_V, and Cmp_W based on the collected $U_{dc}$ and/or $I_{dc}$ received from the electric power collection circuit 107 and predetermined electric power, to control the PWM output module 105 to output the first, second, and third PWM control signals PWM_U, PWM_V, and PWM_W accordingly, thereby controlling the electric power provided by the power source 101 to the three-phase stator windings U, V, and W to achieve preheating of the compressor. When the collected $U_{dc}$ and/or $I_{dc}$ are/is updated, the PWM control module 104

updates, based on the updated collected $U_{dc}$ and/or $I_{dc}$ and the predetermined electric power, the first, second, and third PWM output module control signals Cmp_U, Cmp_V, and Cmp_W output by the PWM control module, to control the PWM output module 105 to accordingly update the output first, second, and third PWM control signals PWM_U, PWM_V, and PWM_W, thereby adjusting the electric power provided by the power source 101 to the three-phase stator windings U, V, and W to improve a preheating effect on the compressor.

As shown in FIG. 3B, the sampling module 303 receives the collected voltage $U_{dc}$ and/or current $I_{dc}$ from the electric power collection circuit 107 (see FIG. 3A) and samples the received collected voltage $U_{dc}$ and/or current $I_{dc}$ to output the sampled voltage $U_s$ and/or the sampled current $I_s$.

The current reconstruction module 304 receives the sampled current $I_s$ from the sampling module 303 and reconstructs direct currents $I_u$, $I_v$, and $I_w$ flowing through the three-phase stator windings U, V, and W based on the received sampled current $I_s$. The current reconstruction module 304 is used to reconstruct a direct current flowing through one of the three-phase stator windings U, V, and W when a superimposition of a direct current and an alternating current is generated for the three-phase stator windings U, V, and W. The current reconstruction module 304 includes a reconstruction counter 3041. At a predetermined count value of the reconstruction counter 3041, the current reconstruction module 304 obtains the received sampled current $I_s$ as the direct current flowing through one of the three-phase stator windings U, V, and W. At the predetermined count value, the control unit 106 triggers its sampling module 303 to sample a currently collected current $I_{dc}$ received from the electric power collection circuit 107 (see FIG. 3A) to output the currently sampled current $I_s$, and then the current reconstruction module 304 takes the currently sampled current $I_s$ received from the sampling module 303 as the direct current flowing through one of the three-phase stator windings U, V, and W. A waveform of the reconstruction counter 3041 is the same as a waveform of one of the first, second, and third counters 1051, 1052, and 1053 of the PWM output module 105 that corresponds to one of the three-phase stator windings U, V, and W, and the two counters start counting synchronously. For example, when reconstructing a direct current flowing through the stator winding U, the waveform of the reconstruction counter 3041 is the same as the waveform of the first counter 1051, and the reconstruction counter starts counting in synchronization with the first counter 1051.

The predetermined count value of the reconstruction counter 3041 is obtained through the detection apparatus 308. When a direct current flowing through one of the three-phase stator windings U, V, and W that is obtained by the current reconstruction module 304 is the same as a direct current flowing through one of the three-phase stator windings U, V, and W that is obtained by the detection apparatus 308, a current count value of the reconstruction counter 3041 is determined as the predetermined count value of the reconstruction counter 3041. When a two-phase direct current is supplied to the stator windings U and V, the detection apparatus 308 is connected to the stator winding U to detect a direct current I flowing through the stator winding U, and the reconstruction counter 3041 obtains the sampled current $I_s$ from the sampling module 303 at each count value of the reconstruction counter 3041. When the sampled current $I_s$ obtained by the reconstruction counter 3041 at a count value of the reconstruction counter 3041 is the same as the direct current I obtained by the detection apparatus 308, the count value of the reconstruction counter 3041 is taken as the predetermined count value. Moreover, once the predetermined count value is determined, there is no need to re-determine it, unless a control scheme for providing electric power to the electric motor 103 changes, for example, the predetermined electric power changes and the control unit 106 changes its control scheme.

The power calculation module 305 receives the sampled voltage $U_s$ from the sampling module 303 and the reconstructed direct currents $I_u$, $I_v$, and $I_w$ from the current reconstruction module 304, and obtains powers $P_u$, $P_v$, and $P_w$ of the three-phase stator windings U, V, and W based on the received sampled voltage $U_s$ and the reconstructed direct currents $I_u$, $I_v$, and $I_w$.

The adjustment module 306 obtains first, second, and third adjustment values $\delta U$, $\delta V$, and $\delta W$ respectively based on the received electric power of the three-phase stator windings U, V, and W and the predetermined electric power. The received electric power of the three-phase stator windings U, V, and W includes the sampled voltage $U_s$ received from the sampling module 303, the reconstructed direct currents $I_u$, $I_v$, and $I_w$ received from the current reconstruction module 304, and the obtained powers $P_u$, $P_v$, and $P_w$ received from the adjustment module 306. The adjustment module 306 includes a PID adjustment module, which performs PID adjustment on the received electric power of the three-phase stator windings U, V, and W and the predetermined electric power to obtain the first, second, and third adjustment values $\delta U$, $\delta V$, and $\delta W$.

In one embodiment, the electric power of the three-phase stator windings U, V, and W is the sampled voltage $U_s$ received from the sampling module 303, and the predetermined electric power is a corresponding predetermined voltage. The PWM control module 104 in this embodiment may optionally not include the current reconstruction module 304 and the power calculation module 305. In another embodiment, the electric power of the three-phase stator windings U, V, and W is the reconstructed direct currents $I_u$, $I_v$, and $I_w$ received from the current reconstruction module 304, and the predetermined electric power is a corresponding predetermined current. The PWM control module 104 in this embodiment may optionally not include the power calculation module 305. In still another embodiment, the electric power of the three-phase stator windings U, V, and W is the obtained powers $P_u$, $P_v$, and $P_w$ received from the power calculation module 305, and the predetermined electric power is a corresponding predetermined power. The predetermined electric power may be input to the control unit 106 by a user, or may be preset in the control unit 106.

The comparison module 307 receives the first, second, and third adjustment values $\delta U$, $\delta V$, and $\delta W$ from the adjustment module 306 and compares the received first, second, and third adjustment values $\delta U$, $\delta V$, and $\delta W$ with a comparison predetermined value, to respectively output the first, second, and third PWM output module control signals Cmp_U, Cmp_V, and Cmp_W.

In one embodiment, a three-phase alternating current is output to the three-phase stator windings U, V, and W and a direct current is output to two-phase stator windings U and V, and the direct current flows through the stator windings U and V in sequence. In this embodiment, each module of the PWM control module 104 obtains a parameter corresponding to the stator winding U (including the voltage, the current, the power, the adjustment value, and the PWM output module control signal that are mentioned above) during operation, and obtains parameters corresponding to the stator windings V and W based on the parameter corresponding to the stator winding U.

Specifically, the sampled voltage $U_s$ output by the sampling module 303 is the voltage $U_u$ on the stator winding U. The current reconstruction module 304 reconstructs the direct current $I_u$ flowing through the stator winding U. The power calculation module 305 obtains the power $P_u$ on the stator winding U based on the voltage $U_u$ on the stator winding U and the direct current $I_u$ flowing through the stator winding U. The adjustment module 306 obtains a first adjustment value $\delta U$ based on the voltage $U_u$ on the stator winding U and the predetermined voltage, or based on the direct current $I_u$ flowing through the stator winding U and the predetermined current, or based on the power $P_u$ on the stator winding U and the predetermined power. The adjustment module 306 further obtains a second and third adjustment values $\delta V$ and $\delta W$ based on the first adjustment value $\delta U$. For example, $\delta V=-\delta U$, and in a rising phase of a waveform of the third count value Cnt_W of the third counter 1053 of the PWM output module 105, $\delta W=\delta U$, and in a descending phase of the waveform of the third count value Cnt_W, $\delta W=\delta V$ (see FIGs. 1B and 4B).

The comparison module 307 obtains the first, second, and third PWM output module control signals Cmp_U, Cmp_V, and Cmp_W through the following formulas:

$$Cmp\_U = Cmp\_U0 - \delta U,$$

$$Cmp\_V = Cmp\_V0 - \delta V,$$

$$Cmp\_W = Cmp\_W0 - \delta W,$$

where $Cmp\_U0$, $Cmp\_V0$, and $Cmp\_WO$ are comparison predetermined values, which are the same as count values at a moment $T_{PWM}/3$ of one periodicity of the waveforms of the first, second, and third count values $Cnt\_U$, $Cnt\_V$, and $Cnt\_W$ of the first, second, and third counters 1051, 1052, and 1053 of the PWM output module 105 (see FIGs. 1B and 4B). When these count values are the same, the comparison predetermined values $Cmp\_U0$, $Cmp\_V0$, and $Cmp\_WO$ are also the same. Therefore, in the rising phase of the waveform of the third count value $Cnt\_W$, $Cmp\_W = Cmp\_U$, and in the descending phase of the waveform of the third count value $Cnt\_W$, $Cmp\_W = Cmp\_V$ (see FIG. 4B).

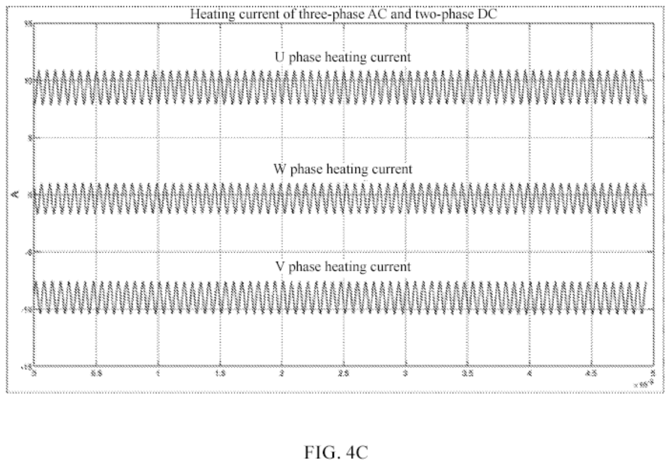

FIG. 4A shows a schematic diagram of the PWM output module 105 outputting the PWM control waveform in the first embodiment; FIG. 4B shows a schematic diagram of the PWM output module 105 outputting the PWM control waveform in the second embodiment; and FIG. 4C shows a schematic diagram of a current waveform generated on the electric motor 103.

The PWM output module 105 is configured to respectively compare the first, second, and third PWM output module control signals $Cmp\_U$, $Cmp\_V$, and $Cmp\_W$ received from the PWM control module 104 to the corresponding first, second, and third count values $Cnt\_U$, $Cnt\_V$, and $Cnt\_W$, to respectively generate the first, second, and third PWM control signals $PWM\_U$, $PWM\_V$, and $PWM\_W$, for respectively controlling the connection and disconnection of the first, second, and third switch apparatuses 1021, 1022, and 1023, thereby controlling the power source 101 to output a three-phase alternating current to the three-phase stator windings or output a superimposition of a three-phase alternating current and a two-phase direct current (see FIGs. 1A and 1B). FIG. 4A shows waveforms of the first, second, and third PWM control signals $PWM\_U$, $PWM\_V$, and $PWM\_W$ (namely, PWM control waveforms) in the first embodiment, for controlling the power source 101 to output a three-phase alternating current to the three-phase stator windings. FIG. 4B shows waveforms of the first, second, and third PWM control signals $PWM\_U$, $PWM\_V$, and $PWM\_W$ (namely, PWM control waveforms) in the second embodiment, for controlling the power source 101 to output a superimposition of a three-phase alternating current and a two-phase (U and V) direct current to the three-phase stator windings.

As shown in FIG. 4A, a waveform of the first count value $Cnt\_U$ is shown in the form of a solid line, a waveform of the second count value $Cnt\_V$ is shown in the form of a dashed line, and the waveform of the third count value $Cnt\_W$ is shown in the form of a dotted line. The waveforms of the first, second, and third count values $Cnt\_U$, $Cnt\_V$, and $Cnt\_W$ are all triangular waves, and these triangular waves have same periodicities and amplitudes and have a phase difference of 120°. Slopes of rising phases of these triangular waves are the same as slopes of descending phases of these triangular waves. The periodicities of the waveforms of the first, second, and third count values $Cnt\_U$, $Cnt\_V$, and $Cnt\_W$ are $T_{PWM}$. The first, second, and third PWM output module control signals $Cmp\_U$, $Cmp\_V$, and $Cmp\_W$ are constant numerical values, and the constant numerical values are the same as count values at a moment $T_{PWM}/3$ of one periodicity of the waveforms of the first, second, and third count values $Cnt\_U$, $Cnt\_V$, and $Cnt\_W$. This solution enables that the waveforms of the first, second, and third PWM control signals $PWM\_U$, $PWM\_V$, and $PWM\_W$ are symmetrical and have a phase difference of 120°, so that a symmetrical three-phase sine wave alternating current is generated for the three-phase stator windings, and a rotating magnetic field is generated, thereby improving a preheating effect on the compressor.

As shown in FIG. 4A, for the first count value $Cnt\_U$ and the first PWM output module control signal $Cmp\_U$, during a period from a moment $T_0$ to the moment $T_{PWM}/3$ (including $T_0$ but excluding $T_{PWM}/3$), the first count value $Cnt\_U$ is less than the first PWM output module control signal $Cmp\_U$. At this time, the first PWM control signal $PWM\_U$ generated by the PWM output module 105 is low level. At the moment $T_{PWM}/3$, the first count value $Cnt\_U$ is equal to the first PWM output module control signal $Cmp\_U$. At this time, the first PWM control signal $PWM\_U$ generated by the PWM output module 105 changes from low level to high level. During a period from the moment $T_{PWM}/3$ to a moment $2T_{PWM}/3$ (excluding $T_{PWM}/3$ and $2T_{PWM}/3$), the first count value $Cnt\_U$ is greater than the first PWM output module control signal $Cmp\_U$. At this time, the first PWM control signal $PWM\_U$ generated by the PWM output module 105 is high level. At the moment $2T_{PWM}/3$, the first count value $Cnt\_U$ is equal to the first PWM output module control signal $Cmp\_U$. At this time, the first PWM control signal $PWM\_U$ generated by the PWM output module 105 changes from high level to low level. During a period from the moment $2T_{Pwm}/3$ to a moment $T_{PWM}$ (excluding $2T_{PWM}/3$ but including $T_{PWM}$), the first count value $Cnt\_U$ is less than the first PWM output module control signal $Cmp\_U$. At this time, the first PWM control signal $PWM\_U$ generated by the PWM output module 105 is low level.

The waveform of the second count value $Cnt\_V$ has a phase difference of 120° from the waveform of the first count value $Cnt\_U$. At the moment $T_{PWM}/3$ of the first count value $Cnt\_U$, the second count value $Cnt\_V$ starts a moment $T_0$ (start moment) of one periodicity thereof. Accordingly, a waveform of the second PWM control signal $PWM\_V$ has a phase difference of 120° from a waveform of the first PWM control signal $PWM\_U$. At the moment $T_{PWM}/3$ of the first PWM control signal $PWM\_U$, the second PWM control signal $PWM\_V$ starts a moment $T_0$ (start moment) of one periodicity thereof.

The waveform of the third count value Cnt_W has a phase difference of 120° from the waveform of the second count value Cnt_V, and has a phase difference of 120° from the waveform of the first count value Cnt_U. At the moment $T_{PWM}/3$ of the second count value Cnt_V, the third count value Cnt_W starts a moment $T_0$ (start moment) of one periodicity thereof. Accordingly, a waveform of the third PWM control signal PWM_W has a phase difference of 120° from the waveform of the second PWM control signal PWM_V. At a moment $T_{PWM}/3$ of the second PWM control signal PWM_V, the third PWM control signal PWM_W starts a moment $T_0$ (start moment) of one periodicity thereof. At a moment $T_{PWM}/3$ before one periodicity of the first count value Cnt_U, the third count value Cnt_W starts the moment $T_0$ (start moment) of one periodicity thereof. Accordingly, the waveform of the third PWM control signal PWM_W has a phase difference of 120° from the waveform of the first PWM control signal PWM_U. At a moment $T_{PWM}/3$ before one periodicity of the first PWM control signal PWM_U, the third PWM control signal PWM_W starts the $T_0$ moment (start moment) of one periodicity thereof.

The waveforms of the first, second, and third PWM control signals PWM_U, PWM_V, and PWM_W are all pulse waveforms, and these pulse waveforms have same periodicities and amplitudes and have a phase difference of 120°. The periodicities of the waveforms of the first, second, and third PWM control signals PWM_U, PWM_V, and PWM_W are the same as the periodicities of the waveforms of the first, second, and third count values Cnt_U, Cnt_V, and Cnt_W, and they are all $T_{PWM}$. The first, second, and third PWM control signals PWM_U, PWM_V, and PWM_W are used to respectively control the connection and disconnection of the first, second, and third switch apparatuses 1021, 1022, and 1023, so that the power source 101 can generate a three-phase sine alternating current for the three-phase stator windings, and the generated three-phase sine alternating current has the same frequency as the first, second, and third PWM control signals PWM_U, PWM_V, and PWM_W. Therefore, in the present application, a three-phase high-frequency alternating current is generated for the electric motor 103, thereby improving a preheating effect on the compressor, and reducing or suppressing electric motor noise.

As shown in FIG. 4B, the waveform of the first count value Cnt_U is shown in the form of a solid line, the waveform of the second count value Cnt_V is shown in the form of a dashed line, and the waveform of the third count value Cnt_W is shown in the form of a dotted line. The waveforms of the first count value Cnt_U, the second count value Cnt_V, and the third count value Cnt_W are all triangular waves, and these triangular waves have same periodicities and amplitudes and have a phase difference of 120°. Slopes of rising phases of these triangular waves are the same as slopes of descending phases of these triangular waves. The periodicities of the waveforms of the first, second, and third count values Cnt_U, Cnt_V, and Cnt_W are $T_{PWM}$. The first PWM output module control signal Cmp_U is a constant first numerical value, and the second PWM output module control signal Cmp_V is a constant second numerical value. In the rising phase of the waveform of the third count value Cnt_W, Cmp_W=Cmp_U, and in the descending phase of the waveform of the third count value Cnt_W, Cmp_W=Cmp_V. In this embodiment, a three-phase alternating current is output to the three-phase stator windings U, V, and W and a direct current is output to two-phase stator windings U and V, for example, the direct current flows through the stator windings U and V in sequence.

To achieve uniform heating and extend a life of an IGBT switch, the compressor is preheated by outputting a direct current to three-phase U, V, and W alternately in pairs. For example, alternating in pairs is performed in the following three ways: the direct current flows through the stator windings U and V in sequence, the direct current flows through the stator windings V and W in sequence, and the direct current flows through the stator windings W and U in sequence. In other embodiments, other suitable methods are used to supply a direct current to the three-phase stator windings alternately in pairs.

As described above, the first, second, and third PWM output module control signals Cmp_U, Cmp_V, and Cmp_W are obtained through the following formulas:

$$Cmp\_U = Cmp\_U0 - \delta U,$$

$$Cmp\_V = Cmp\_V0 - \delta V,$$

$$Cmp\_W = Cmp\_W0 - \delta W,$$

where Cmp_U0, Cmp_V0, and Cmp_WO are the count values at the moment $T_{PWM}/3$ of one periodicity of the waveforms of the first, second, and third count values Cnt_U, Cnt_V, and Cnt_W, and these count values are the same. When a direct current is output to the two-phase stator windings U and V, for example, the direct current flows through the stator windings U and V in sequence, $\delta V = -\delta U$, so that the first and second PWM output module control signals Cmp_U and Cmp_V are symmetrical with respect to the count value at the moment $T_{PWM}/3$. In the rising phase of the waveform of the third count value Cnt_W, $\delta W = \delta U$, and in the descending phase of the waveform of the third count value Cnt_W, $\delta W = \delta V$. Therefore, in the rising phase of the waveform of the third count value Cnt_W, Cmp_W=Cmp_U, and in the descending phase of the waveform of the third count value Cnt_W, Cmp_W=Cmp_V. The first, second, and third PWM output module control signals Cmp_U, Cmp_V, and Cmp_W are compared with the first, second, and third count values Cnt_U, Cnt_V, and Cnt_W whose waveforms have a phase difference of 120°, to obtain the first, second, and third PWM control signals PWM_U, PWM_V, and PWM_W, so that a symmetrical three-phase alternating current is generated for the three-phase stator windings, and a rotating magnetic field is generated, thereby improving a preheating effect on the compressor

As shown in FIG. 4B, for the first count value Cnt_U and the first PWM output module control signal Cmp_U, during a period from a moment $T_{U0}$ to a moment $T_{U1}$ (including $T_{U0}$ but excluding $T_{U1}$), the first count value Cnt_U is less than the first PWM output module control signal Cmp_U. At this time, the first PWM control signal PWM_U generated by the PWM output module 105 is low level. At the moment $T_{U1}$, the first count value Cnt_U is equal to the first PWM output module control signal Cmp_U. At this time, the first PWM control signal PWM_U generated by the PWM output module 105 changes from low level to high level. During a period from the moment $T_{U1}$ to a moment $T_{U2}$ (excluding $T_{U1}$ and $T_{U2}$), the first count value Cnt_U is greater than the first PWM output module control signal Cmp_U. At this time, the first PWM control signal PWM_U generated by the PWM output module 105 is high level. At the moment $T_{U2}$, the first count value Cnt_U is equal to the first PWM output module control signal Cmp_U. At this time, the first PWM control signal PWM_U generated by the PWM output module 105 changes from high level to low level. During a period from the moment $T_{U2}$ to a moment $T_{UPWM}$ (excluding $T_{U2}$ but including $T_{UPWM}$), the first count value Cnt_U is less than the first PWM output module control signal Cmp_U. At this time, the first PWM control signal PWM_U generated by the PWM output module 105 is low level.

A phase of the waveform of the second count value Cnt_V is 120° different from a phase of the waveform of the first count value Cnt_U. At the moment $T_{UPWM}/3$ of the first count value Cnt_U, the second count value Cnt_V starts a moment $T_{V0}$ (start moment) of one periodicity thereof. For the second count value Cnt_V and the second PWM output module control signal Cmp_V, during a period from the moment $T_{V0}$ to a moment $T_{V1}$ (including $T_{V0}$ but excluding $T_{V1}$), the second count value Cnt_V is less than the second PWM output module control signal Cmp_V. At this time, the second PWM control signal PWM_V generated by the PWM output module 105 is low level. At the moment $T_{V1}$, the second count value Cnt_V is equal to the second PWM output module control signal Cmp_V. At this time, the second PWM control signal PWM_V generated by the PWM output module 105 changes from low level to high level. During a period from the moment $T_{V1}$ to a moment $T_{V2}$ (excluding $T_{V1}$ and $T_{V2}$), the second count value Cnt_V is greater than the second PWM output module control signal Cmp_V. At this time, the second PWM control signal PWM_V generated by the PWM output module 105 is high level. At the moment $T_{V2}$, the second count value Cnt_V is equal to the second PWM output module control signal Cmp_V. At this time, the second PWM control signal PWM_V generated by the PWM output module 105 changes from high level to low level. During a period from the moment $T_{V2}$ to a moment $T_{VPWM}$ (excluding $T_{V2}$ but including $T_{VPWM}$), the second count value Cnt_V is less than the second PWM output module control signal Cmp_V. At this time, the second PWM control signal PWM_V generated by the PWM output module 105 is low level. The moment $T_{V1}$ of the second count value Cnt_V is the same as the moment $T_{U2}$ of the first count value Cnt_U.

A phase of the waveform of the third count value Cnt_V is 120° different from the phase of the waveform of the second count value Cnt_U. At a moment $T_{VPWM}/3$ of the second count value Cnt_V, the third count value Cnt_W starts a moment $T_{W0}$ (start moment) of one periodicity thereof. For the third count value Cnt_W and the third PWM output module control signal Cmp_W, during a period from the moment $T_{W0}$ to a moment $T_{W1}$ (including $T_{W0}$ but excluding $T_{W1}$), the third count value Cnt_W is less than the third PWM output module control signal Cmp_W. At this time, the third PWM control signal PWM_V generated by the PWM output module 105 is low level. At the moment $T_{W1}$, the third count value Cnt_W is equal to the third PWM output module control signal Cmp_W. At this time, the third PWM control signal PWM_W generated by the PWM output module 105 changes from low level to high level. During a period from the moment $T_{W1}$ to a moment $T_{W2}$ (excluding $T_{W1}$ and $T_{W2}$), the third count value Cnt_W is greater than the third PWM output module control signal Cmp_W. At this time, the third PWM control signal PWM_W generated by the PWM output module 105 is high level. At the moment $T_{W2}$, the third count value Cnt_W is equal to the third PWM output module control signal Cmp_W. At this time, the third PWM control signal PWM_W generated by the PWM output module 105 changes from high level to low level. During a period from the moment $T_{W2}$ to a moment $T_{WPWM}$ (excluding $T_{W2}$ but including $T_{WPWM}$), the third count value Cnt_W is less than the third PWM output module control signal Cmp_W. At this time, the third PWM control signal PWM_W generated by the PWM output module 105 is low level. The moment $T_{W1}$ of the third count value Cnt_W is the same as the moment $T_{V2}$ of the second count value Cnt_V, and the moment $T_{W2}$ of the third count value Cnt_W is the same as the moment $T_{U1}$ of the next periodicity of the first count value Cnt_U.

In one embodiment, the PWM control module 104 outputs first, second, and third PWM output module control signals Cmp_U, Cmp_V, and Cmp_W, based on the collected $U_{dc}$ and/or $I_{dc}$ received from the electric power collection circuit 107 and the predetermined electric power (see FIG 1B). When the collected $U_{dc}$ and/or $I_{dc}$ are/is updated, the PWM control module 104 updates the first, second, and third PWM output module control signals Cmp_U, Cmp_V, and Cmp_W output by the PWM control module, based on the updated collected $U_{dc}$

and/or $I_{dc}$ and the predetermined electric power. At this time, the first PWM output module control signal Cmp_U is updated to a new constant first numerical value, and the second PWM output module control signal Cmp_V is updated to a new constant second numerical value. Before the next update, the current first numerical value and second numerical value remain constant until a new first numerical value and a second numerical value are generated in the next update. In one embodiment, each update is separated by a periodicity of $T_{PWM}$ or $2T_{PWM}$. The updated first, second, and third PWM output module control signals Cmp_U, Cmp_V, and Cmp_W are used to control the PWM output module 105 to update the output first, second, and third PWM control signals PWM_U, PWM_V, and PWM_W accordingly, thereby adjusting the electric power provided by the power source 101 to the three-phase stator windings. As shown in FIG. 4B, when the first PWM output module control signal Cmp_U decreases, the duty cycle of the first PWM control signal PWM_U increases accordingly, as shown by the arrow on the first PWM control signal PWM_U. When the first PWM output module control signal Cmp_U decreases, the second PWM output module control signal Cmp_V increases accordingly. At this time, the duty cycle of the second PWM control signal PWM_V decreases accordingly, as shown by the arrow on the second PWM control signal PWM_V. The duty cycle of the third PWM control signal PWM_W remains unchanged. In other embodiments, the first, second, and third PWM output module control signals Cmp_U, Cmp_V, and Cmp_W and the first, second, and third PWM control signals PWM_U, PWM_V, and PWM_W may not be updated.

As shown in FIG 4C, when the first, second, and third PWM control signals PWM_U, PWM_V, and PWM_W output by the PWM output module 105 control the connection and disconnection of the first, second, and third switch apparatus 1021, 1022, and 1023 (see FIGs 1A and 1B), such that a superimposition of a direct current and an alternating current is generated in the stator windings U and V of the electric motor 103, and an alternating current is generated in the stator winding W of the electric motor 103. The direct current in the stator winding U and the direct current generated in the stator winding V are the same in magnitude and opposite in direction. That is, the power source 101 generates a two-phase direct current and a three-phase alternating current in the electric motor. The ordinate of FIG 4C shows the amplitude of the current. The direct current in the stator windings U and V is approximately 9A. The abscissa of FIG 4C shows time, and the current waveform shows a waveform with a time length of 0- $5 \times 10^{-3}$ s, where the periodicity of these waveforms is approximately 1/16 $\times 10^{-3}$ s and the frequency is approximately 16 KHZ. This frequency is roughly close to the upper limit of audible sound frequencies, and thus can reduce noise.

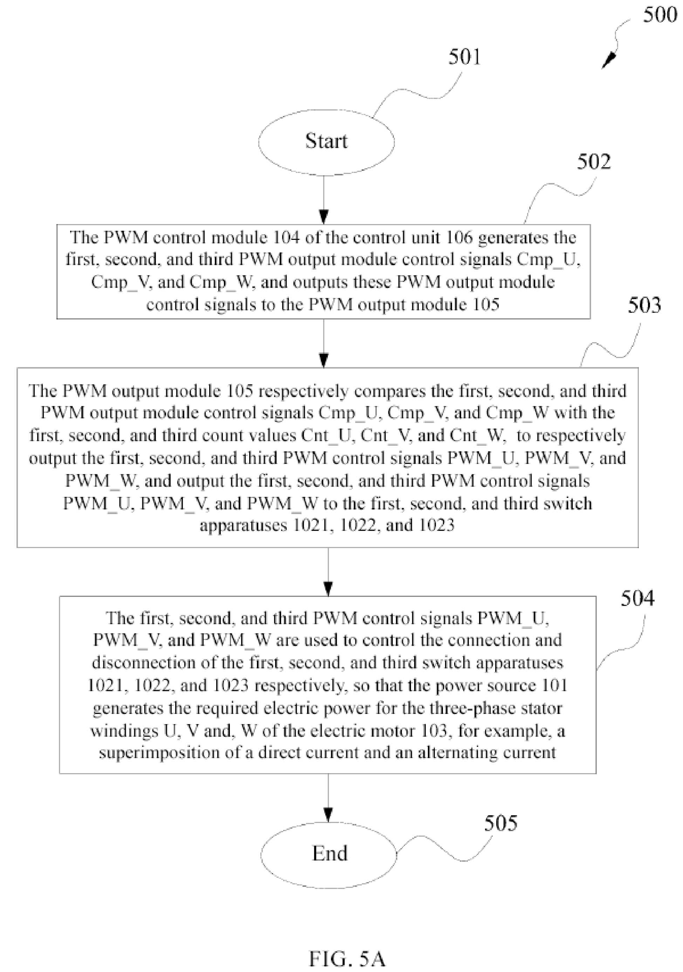

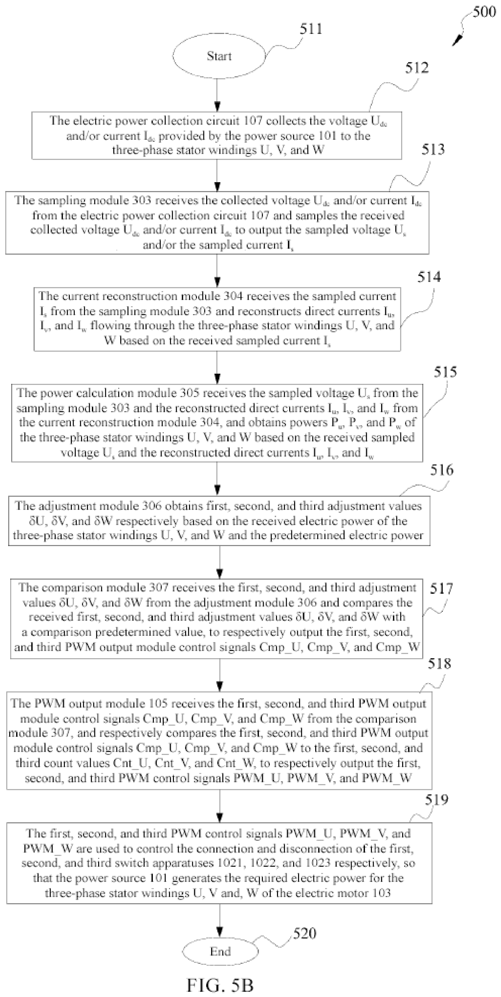

FIG. 5A shows a preheating method 500 for a compressor according to one embodiment of the present application, and FIG. 5B shows a preheating method 500 for a compressor according to another embodiment of the present application. The preheating method 500 controls the electric power provided by the power source 101 to the three-phase stator windings U, V, and W of the electric motor through the preheating apparatus 100, thus achieving preheating of the compressor.

As shown in FIG. 5A, the preheating method 500 for a compressor starts from step 501 and then goes to step 502. In step 502, the first, second, and third PWM output module control signals Cmp_U, Cmp_V, and Cmp_W are generated by the PWM control module 104 of the control unit 106. Then, it goes from step 502 to step 503.

In step 503, the PWM output module 105 of the control unit 106 receives the first, second, and third PWM output module control signals Cmp_U, Cmp_V, and Cmp_W from the PWM control module 104, and respectively compares the first, second, and third PWM output module control signals Cmp_U, Cmp_V, and Cmp_W to first, second, and third count values Cnt_U, Cnt_V, and Cnt_W, to respectively output the first, second, and third PWM control signals PWM_U, PWM_V, and PWM_W. Then, it goes from step 503 to step 504.

In step 504, the first, second, and third PWM control signals PWM_U, PWM_V, and PWM_W are used to control the connection and disconnection of the first, second, and third switch apparatuses 1021, 1022, and 1023 respectively, so that the power source 101 generates the required electric power for the three-phase stator windings U, V and, W of the electric motor 103, for example, the superimposition of a direct current and an alternating current. Then, it goes from step 504 to step 505 to end the execution of the preheating method 500.

As shown in FIG. 5B, the preheating method 500 for a compressor starts from step 511 and then goes to step 512. In step 512, the electric power collection circuit 107 collect the voltage $U_{dc}$ and/or current $I_{dc}$ provided by the power source 101 to the three-phase stator windings U, V, and W. Then, it goes from step 512 to step 513.

In step 513, the sampling module 303 receives the collected voltage $U_{dc}$ and/or current $I_{dc}$ from the electric power collection circuit 107 and samples the received collected voltage $U_{dc}$ and/or current $I_{dc}$ to output the sampled voltage $U_s$ and/or the sampled current $I_s$. Then, it goes from step 513 to step 514.

In step 514, the current reconstruction module 304 receives the sampled current $I_s$ from the sampling module 303 and reconstructs direct currents $I_u$, $I_v$, and $I_w$ flowing through the three-phase stator windings U, V, and W based on the received sampled current $I_s$. Then, it goes from step 514 to step 515.

In step 515, the power calculation module 305 receives the sampled voltage $U_s$ from the sampling module 303 and the reconstructed direct currents $I_u$, $I_v$, and $I_w$ from the current reconstruction module 304, and obtains powers $P_u$, $P_v$, and $P_w$ of the three-phase stator windings U, V, and W based on the received sampled voltage $U_s$ and the reconstructed direct currents $I_u$, $I_v$, and $I_w$. Then, it goes from step 515 to step 516. The preheating method 500 may optionally include steps 514 and 515.

In step 516, the adjustment module 306 obtains first, second, and third adjustment values $\delta U$, $\delta V$, and $\delta W$ respectively based on the received electric power of the three-phase stator windings U, V, and W and the predetermined electric power. The received electric power of the three-phase stator windings U, V, and W includes the sampled voltage $U_s$ received from the sampling module 303, the reconstructed direct currents $I_u$, $I_v$, and $I_w$ received from the current reconstruction module 304, and the obtained powers $P_u$, $P_v$, and $P_w$ received from the adjustment module 306. Then, it goes from step 516 to step 517.

In step 517, the comparison module 307 receives the first, second, and third adjustment values $\delta U$, $\delta V$, and $\delta W$ from the adjustment module 306 and compares the received first, second, and third adjustment values $\delta U$, $\delta V$, and $\delta W$ with a comparison predetermined value, to respectively output the first, second, and third PWM output module control signals Cmp_U, Cmp_V, and Cmp_W. Then, it goes from step 517 to step 518.

In step 518, the PWM output module 105 receives the first, second, and third PWM output module control signals Cmp_U, Cmp_V, and Cmp_W from the comparison module 307, and respectively compares the first, second, and third PWM output module control signals Cmp_U, Cmp_V, and Cmp_W to the first, second, and third count values Cnt_U, Cnt_V, and Cnt_W, to respectively output the first, second, and third PWM control signals PWM_U, PWM_V, and PWM_W. Then, it goes from step 518 to step 519.

In step 519, the first, second, and third PWM control signals PWM_U, PWM_V, and PWM_W are used to control the connection and disconnection of the first, second, and third switch apparatuses 1021, 1022, and 1023 respectively, so that the power source 101 generates the required electric power for the three-phase stator windings U, V and, W of the electric motor 103, for example, the superimposition of a direct current and an alternating current. Then, it goes from step 519 to step 520 to end the execution of the preheating method 500.

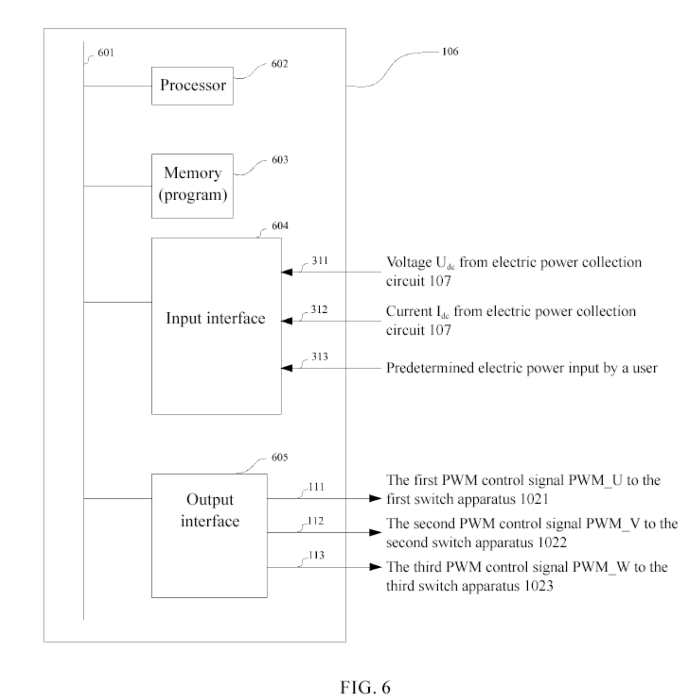

FIG. 6 shows a schematic block diagram of the control unit 106 of the preheating apparatus 100.

As shown in FIG. 6, the control device 106 comprises a bus 601, a processor 602, a memory 603, an input interface 604 and an output interface 605. The processor 602, the memory 603, the input interface 604 and the output interface 605 are connected to the bus 601. The processor 602 can read a program (or instruction) from the memory 603 and execute the program (or instruction) to perform functions of processing data and controlling the inverter circuit 102 (see FIGs. 1A and 1B). The processor 602 can also write the data or program (or instruction) into the memory 603. The memory 603 can store the program (instruction) or the data. By executing the instruction in the memory 603, the processor 602 can control the memory 603, the input interface 604 and the output interface 605.

In one embodiment, the input interface 604 is configured to receive the voltage $U_{dc}$ from the electric power collection circuit 107 through the connection line 311, receive the current $I_{dc}$ from the electric power collection circuit 107 through the connection line 312, and receive a predetermined electric power input by a user through the connection line 313. The input interface 604 is further configured to convert the received voltage $U_{dc}$, current $I_{dc}$ and predetermined electric power into a signal identifiable by the processor 602 and output the signal to the processor 602. The processor 602 is configured to process (e.g., calculate) the received signal to output a control signal for the first switch apparatus 1021, a control signal for the second switch apparatus 1022 and a control signal for the third switch apparatus 1023.

The output interface 605 is configured to receive these control signals for the first, second, and third switch apparatuses 1021, 1022, and 1023 from processor 602, and convert these control signals into a first PWM control signal PWM_U suitable for the first switch apparatus 1021, a second PWM control signal PWM_V suitable for the second switch apparatus 1022, and a third PWM control signal PWM_W suitable for the third switch apparatus 1023. The output interface 605 is further configured to send the first PWM control signal PWM_U to the first switch apparatus 1021 through the connection line 111, send the second PWM control signal PWM_V to the second switch apparatus 1022 through the connection line 112, and send the third PWM control signal PWM_W to the third switch apparatus 1023 through the connection line 113. The first, second, and third PWM control signals PWM_U, PWM_V, and PWM_W respectively control the connection and disconnection of the first, second, and third switch apparatuses 1021, 1022, and 1023, thereby controlling the electric power provided by the power source 101 to the electric motor 103 (see FIG. 1B) for preheating the compressor (not shown).

In another embodiment, the input interface 604 does not receive the voltage $U_{dc}$ and current $I_{dc}$ from the electric power collection circuit 107. The input interface 604 receives a predetermined electric power input by the user through the connection line 313, converts the received predetermined electric power into a signal identifiable by the processor 602, and outputs the signal to the processor 602. The processor 602 reads the program (or instruction) from the memory 603 and executes the program (or instruction) to process (e.g., calculate) the received signal, and thereby to output a control signal for the first switch apparatus 1021, a control signal for the second switch apparatus 1022 and a control signal for the third switch apparatus 1023. Other operations in this another embodiment are the same as the previous embodiment.

Although the present application has been described in conjunction with the examples of the embodiments outlined above, various alternatives, modifications, changes, improvements and/or substantial equivalents, whether known or now or soon foreseeable, will be obvious to those skilled in the art. In addition, the technical effects and/or technical problems described in this specification are exemplary rather than restrictive; Therefore, the disclosure in this specification may be used to solve other technical problems and have other technical effects and/or can solve other technical problems. Accordingly, the examples of the embodiments of the present application set forth above are intended to be illustrative rather than restrictive. Various changes may be made without departing from the spirit or scope of the present application. Accordingly, the present application is intended to include all known or earlier developed alternatives, modifications, variations, improvements and/or substantial equivalents.

## Claims

1. A preheating apparatus (100) for a compressor, wherein the compressor comprises an electric motor (103) with three-phase stator windings U, V, and W, wherein the preheating apparatus (100) comprises:

   an inverter circuit (102), which is connected to a power source (101) and comprises first, second, and third switch apparatuses (1021, 1022, 1023), where the first, second, and third switch apparatuses (1021, 1022, 1023) are respectively connected to the three-phase stator windings U, V, and W, and are configured to be connected and disconnected to respectively control electric power provided by the power source (101) to corresponding three-phase stator windings U, V, and W; and
   a control unit (106), which is configured to control connection and disconnection of the first, second, and third switch apparatuses (1021, 1022, 1023) of the inverter circuit (102), wherein the control unit (106) comprises:

      a PWM control module (104), which is configured to output first, second, and third PWM output module control signals Cmp_U, Cmp_V, and Cmp_W; and
      a PWM output module (105), which comprises first, second, and third counters (1051, 1052, 1053) respectively having first, second, and third count values Cnt_U, Cnt_V, and Cnt_W, wherein the PWM output module (105) is configured to respectively compare the first, second, and third PWM output module control signals Cmp_U, Cmp_V, and Cmp_W received from the PWM control module (104) to corresponding first, second, and third count values Cnt_U, Cnt_V, and Cnt_W, to respectively generate first, second, and third PWM control signals PWM_U, PWM_V, and PWM_W which respectively control the connection and disconnection of the first, second, and third switch apparatuses (1021, 1022, 1023),
   wherein waveforms of the first, second, and third count values Cnt_U, Cnt_V, and Cnt_W are triangular waves; and
   at least two of the first, second, and third PWM output module control signals Cmp_U, Cmp_V, and Cmp_W are constant numerical values.

2. The preheating apparatus (100) for a compressor according to claim 1, wherein
   when two of the first, second, and third PWM output module control signals Cmp_U, Cmp_V, and Cmp_W are a constant first numerical value and a constant second numerical value, respectively, a remaining one of the first, second, and third PWM output module control signals Cmp_U, Cmp_V, and Cmp_W is one of the first numerical value and the second numerical value in a rising phase of a triangular wave of its corresponding count value, and is the other one of the first numerical value and the second numerical value in a descending phase of the triangular wave of the corresponding count value.

3. The preheating apparatus (100) for a compressor according to claim 2, wherein
   two of the first, second, and third PWM output module control signals Cmp_U, Cmp_V, and Cmp_W are alternately selected to be the constant first numerical value and the constant second numerical value, respectively.

4. The preheating apparatus (100) for a compressor according to claim 1, wherein
   triangular waves of the first, second, and third count values Cnt_U, Cnt_V, and Cnt_W have same periodicities and amplitudes and have a phase difference of 120°.

5. The preheating apparatus (100) for a compressor according to claim 1, wherein the preheating apparatus (100) further comprises:

   an electric power collection circuit (107; 301, 302), which is connected to the inverter circuit (102) and configured to collect a voltage $U_{dc}$ and/or a current $I_{dc}$ provided by the power source (101) to the three-phase stator windings U, V, and W,

wherein the PWM control module (104) updates, based on the collected voltage $U_{dc}$ and/or current $I_{dc}$, the first, second, and third PWM output module control signals Cmp_U, Cmp_V, and Cmp_W output by the PWM control module, such that the PWM output module (105) updates the first, second, and third PWM control signals PWM_U, PWM_V, and PWM_W output by the PWM output module accordingly.

6. The preheating apparatus (100) for a compressor according to claim 5, wherein the PWM control module (104) comprises:

a sampling module (303), which is configured to sample the collected voltage $U_{dc}$ and/or current $I_{dc}$ to output the sampled voltage $U_s$ and/or the sampled current $I_s$;

a current reconstruction module (304), which is configured to reconstruct direct currents $I_u$, $I_v$, and $I_w$ flowing through the three-phase stator windings U, V, and W based on the sampled current $I_s$;

a power calculation module (305), which is configured to obtain powers $P_u$, $P_v$, and $P_w$ of the three-phase stator windings U, V, and W based on the sampled voltage $U_s$ and the reconstructed direct currents $I_u$, $I_v$, and $I_w$;

an adjustment module (306), which is configured to obtain first, second, and third adjustment values $\delta U$, $\delta V$, and $\delta W$ respectively based on received electric power of the three-phase stator windings U, V, and W and predetermined electric power, wherein the electric power of the three-phase stator windings U, V, and W comprises the sampled voltage $U_s$, the reconstructed direct currents $I_u$, $I_v$, and $I_w$, and the obtained powers $P_u$, $P_v$, and $P_w$; and

a comparison module (307), which is configured to compare the first, second, and third adjustment values $\delta U$, $\delta V$, and $\delta W$ received from the adjustment module (306) with a comparison predetermined value to respectively output the first, second, and third PWM output module control signals Cmp_U, Cmp_V, and Cmp_W, wherein the PWM control module (104) optionally comprises the current reconstruction module (304) and the power calculation module (305).

7. The preheating apparatus (100) for a compressor according to claim 6, wherein

the current reconstruction module (304) comprises a reconstruction counter (3041), and is configured to obtain the sampled current $I_s$ as a direct current flowing through one of the three-phase stator windings U, V, and W at a predetermined count value of the reconstruction counter (3041),

wherein when the direct current obtained by the current reconstruction module (304) is the same as a corresponding direct current obtained by a detection apparatus (308), a current count value of the reconstruction counter (3041) is determined as the predetermined count value; and the reconstruction counter (3041) starts counting synchronously with one of the first, second, and third counters (1051, 1052, 1053) corresponding to one of the three-phase stator windings U, V, and W.

8. The preheating apparatus (100) for a compressor according to claim 6, wherein
the adjustment module (306) uses PID adjustment to obtain the first, second, and third adjustment values $\delta U$, $\delta V$, and $\delta W$.

9. The preheating apparatus (100) for a compressor according to claim 6, wherein
the comparison predetermined value is a count value of the first, second, and third counters (1051, 1052, 1053) at a moment of 1/3 periodicity $T_{PWM}/3$ of the first, second, and third counters.

10. A preheating method for a compressor, wherein the compressor comprises an electric motor (103) with three-phase stator windings U, V, and W, wherein the method comprises:
controlling, by the preheating apparatus (100) according to claims 1 to 9, the electric power provided by the power source (101) to the three-phase stator windings U, V, and W of the electric motor (103).

FIG. 1A

100

102

Inverter circuit

1021

First switch
apparatus

103

Electric motor

Winding
U

101

Power
source

1022

Second switch
apparatus

Winding
V

1023

Third switch
apparatus

Winding
W

107

Electric power
collection circuit

106

Control unit

U₄ I₄

104

PMW control
module

Predetermined
electric power

Cmp_U
Cmp_V
Cmp_W

105

PMW output module

1051

First counter

1052

Second counter

1053

Third counter

111

PWM_U

112

PWM_V

113

PWM_W

FIG. 1B

18

FIG. 2

FIG. 3A

FIG. 3B

FIG. 4A

FIG. 4B

FIG. 4C

500

501

Start

502

The PWM control module 104 of the control unit 106 generates the first, second, and third PWM output module control signals Cmp_U, Cmp_V, and Cmp_W, and outputs these PWM output module control signals to the PWM output module 105

503

The PWM output module 105 respectively compares the first, second, and third PWM output module control signals Cmp_U, Cmp_V, and Cmp_W with the first, second, and third count values Cnt_U, Cnt_V, and Cnt_W, to respectively output the first, second, and third PWM control signals PWM_U, PWM_V, and PWM_W, and output the first, second, and third PWM control signals PWM_U, PWM_V, and PWM_W to the first, second, and third switch apparatuses 1021, 1022, and 1023

504

The first, second, and third PWM control signals PWM_U, PWM_V, and PWM_W are used to control the connection and disconnection of the first, second, and third switch apparatuses 1021, 1022, and 1023 respectively, so that the power source 101 generates the required electric power for the three-phase stator windings U, V and, W of the electric motor 103, for example, a superimposition of a direct current and an alternating current

505

End

FIG. 5A

500

511

Start

512

The electric power collection circuit 107 collects the voltage $U_{dc}$ and/or current $I_{dc}$ provided by the power source 101 to the three-phase stator windings U, V, and W

513

The sampling module 303 receives the collected voltage $U_{dc}$ and/or current $I_{dc}$ from the electric power collection circuit 107 and samples the received collected voltage $U_{dc}$ and/or current $I_{dc}$ to output the sampled voltage $U_s$ and/or the sampled current $I_s$

514

The current reconstruction module 304 receives the sampled current $I_s$ from the sampling module 303 and reconstructs direct currents $I_u$, $I_v$, and $I_w$ flowing through the three-phase stator windings U, V, and W based on the received sampled current $I_s$

515

The power calculation module 305 receives the sampled voltage $U_s$ from the sampling module 303 and the reconstructed direct currents $I_u$, $I_v$, and $I_w$ from the current reconstruction module 304, and obtains powers $P_u$, $P_v$, and $P_w$ of the three-phase stator windings U, V, and W based on the received sampled voltage $U_s$ and the reconstructed direct currents $I_u$, $I_v$, and $I_w$

516

The adjustment module 306 obtains first, second, and third adjustment values $\delta U$, $\delta V$, and $\delta W$ respectively based on the received electric power of the three-phase stator windings U, V, and W and the predetermined electric power

517

The comparison module 307 receives the first, second, and third adjustment values $\delta U$, $\delta V$, and $\delta W$ from the adjustment module 306 and compares the received first, second, and third adjustment values $\delta U$, $\delta V$, and $\delta W$ with a comparison predetermined value, to respectively output the first, second, and third PWM output module control signals Cmp_U, Cmp_V, and Cmp_W

518

The PWM output module 105 receives the first, second, and third PWM output module control signals Cmp_U, Cmp_V, and Cmp_W from the comparison module 307, and respectively compares the first, second, and third PWM output module control signals Cmp_U, Cmp_V, and Cmp_W to the first, second, and third count values Cnt_U, Cnt_V, and Cnt_W, to respectively output the first, second, and third PWM control signals PWM_U, PWM_V, and PWM_W

519

The first, second, and third PWM control signals PWM_U, PWM_V, and PWM_W are used to control the connection and disconnection of the first, second, and third switch apparatuses 1021, 1022, and 1023 respectively, so that the power source 101 generates the required electric power for the three-phase stator windings U, V and, W of the electric motor 103

520

End

FIG. 5B

FIG. 6

## INTERNATIONAL SEARCH REPORT

| International application No. |
|---|
| **PCT/CN2024/093668** |

**A. CLASSIFICATION OF SUBJECT MATTER**

H02P23/14(2006.01)i; H02P23/00(2016.01)i; H02P23/10(2006.01)i; H02P27/08(2006.01)i; H02P29/62(2016.01)i; F25B1/00(2006.01)i; B60H1/14(2006.01)i; F25B49/02(2006.01)i; H02P7/00(2016.01)i

According to International Patent Classification (IPC) or to both national classification and IPC

**B. FIELDS SEARCHED**

Minimum documentation searched (classification system followed by classification symbols)

IPC:H02P F25B B60H

Documentation searched other than minimum documentation to the extent that such documents are included in the fields searched

Electronic data base consulted during the international search (name of data base and, where practicable, search terms used)

CNTXT, ENTXT, ENTXTC, WPABS: 电机, 压缩机, 空调, 马达, 加热, 预热, 高频, 直流, 计数, 叠加, 比较, 噪声, motor, electric machine, compressor, air conditioner, heat, high frequency, DC, direct current, count, add, compare, noise

**C. DOCUMENTS CONSIDERED TO BE RELEVANT**

| Category* | Citation of document, with indication, where appropriate, of the relevant passages | Relevant to claim No. |
|---|---|---|
| PX | CN 116667735 A (YORK GUANGZHOU AIR CONDITIONER REFRIGERATING EQUIPMENT CO., LTD. et al.) 29 August 2023 (2023-08-29) claims 1-10 | 1-10 |
| A | CN 116039341 A (ZHEJIANG LEAPMOTOR TECHNOLOGY CO., LTD. et al.) 02 May 2023 (2023-05-02) description, paragraphs [0010]-[0054], and figures 1-8 | 1-10 |
| A | CN 104412049 A (MITSUBISHI ELECTRIC CORP.) 11 March 2015 (2015-03-11) entire document | 1-10 |
| A | CN 115622479 A (ZHUHAI WEIGAO FREQUENCY CONVERSION SCIENCE & TECHNOLOGY CO., LTD.) 17 January 2023 (2023-01-17) entire document | 1-10 |
| A | US 2013291578 A1 (HATAKEYAMA KAZUNORI et al.) 07 November 2013 (2013-11-07) entire document | 1-10 |
| A | US 4135122 A (WEYERHAEUSER CO.) 16 January 1979 (1979-01-16) entire document | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 July 2024** | **31 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/093668**

| Patent document cited in search report | | | Publication date (day/month/year) | Patent family member(s) | | | Publication date (day/month/year) |
|---|---|---|---|---|---|---|---|
| CN | 116667735 | A | 29 August 2023 | None | | | |
| CN | 116039341 | A | 02 May 2023 | CN | 116039341 | B | 02 May 2023 |
| CN | 104412049 | A | 11 March 2015 | JP | 5901765 | B2 | 13 April 2016 |
| | | | | JPWO | 2014002251 | A1 | 30 May 2016 |
| | | | | US | 2015168033 | A1 | 18 June 2015 |
| | | | | US | 9746216 | B2 | 29 August 2017 |
| | | | | EP | 2884203 | A1 | 17 June 2015 |
| | | | | EP | 2884203 | B1 | 13 November 2019 |
| | | | | WO | 2014002251 | A1 | 03 January 2014 |
| | | | | CN | 104412049 | B | 24 May 2017 |
| CN | 115622479 | A | 17 January 2023 | CN | 115622479 | B | 02 January 2024 |
| US | 2013291578 | A1 | 07 November 2013 | US | 9618249 | B2 | 11 April 2017 |
| | | | | JP | 5490260 | B2 | 14 May 2014 |
| | | | | JPWO | 2012086010 | A1 | 22 May 2014 |
| | | | | AU | 2010365997 | A1 | 09 May 2013 |
| | | | | AU | 2010365997 | B2 | 26 March 2015 |
| | | | | EP | 2657626 | A1 | 30 October 2013 |
| | | | | EP | 2657626 | A4 | 06 January 2016 |
| | | | | EP | 2657626 | B1 | 25 November 2020 |
| | | | | ES | 2837123 | T3 | 29 June 2021 |
| | | | | WO | 2012086010 | A1 | 28 June 2012 |
| | | | | CN | 103270376 | A | 28 August 2013 |
| | | | | CN | 103270376 | B | 05 April 2015 |
| US | 4135122 | A | 16 January 1979 | GB | 1601880 | A | 04 November 1981 |
| | | | | GB | 1601879 | A | 04 November 1981 |
| | | | | CA | 1093189 | A | 06 January 1981 |
| | | | | DE | 2822767 | A1 | 07 December 1978 |

Form PCT/ISA/210 (patent family annex) (July 2022)